# EUROPEAN PATENT SPECIFICATION

(11) **EP 0 533 192 B1**
(45) Date of publication and mention of the grant of the patent: **23.04.1997**
(21) Application number: 92116017.2
(22) Date of filing: 18.09.1992
(51) Int. Cl.: C08J 3/24, C08L 33/02

(54) **Process for preparing highly water absorbent resin**
Verfahren zur Herstellung eines stark wasserabsorbierenden Harzes
Procédé pour préparer de résine à capacité élevée d'absorption d'eau

(30) Priority: 20.09.1991 KR 1657691; 17.01.1992 KR 64092
(43) Date of publication of application: 24.03.1993
(73) Proprietor: LUCKY LTD., Seoul 150-721 (KR)
(72) Inventor: Tae-Hwan, Jang, Yuseong-ku, Daejeon (KR); Su-Beom, Choi, Yuseong-ku, Daejeon (KR); Hyung-Mann, Lee, Yuseong-ku, Daejeon (KR); Myung-Joong, Kim, Yuseong-ku, Daejeon (KR)
(74) Representative: Turi, Michael, Dipl.-Phys.

(56) References cited:
- EP-A- 0 083 022
- GB-A- 2 126 591
- US-A- 5 032 628
- DATABASE WPIL Section Ch, Week 9140, Derwent Publications Ltd., London, GB; Class A14, AN 91-292672

## Description

The present invention relates to a process for preparing a water absorbent resin; and, particulary to a process for preparing a highly water absorbent resin having a superior suction power and excellent gel strength.

Many water absorbent materials including natural materials (e.g., sponge, pulp and paper) and synthetic materials(which may be prepared by partially neutralizing a hydrous polymer having a hydrophilic group, e.g., -OH, -NH₂ or -COOH) have been used conventionally as sanitary materials and in the agricultural field. However, since they absorb water or other fluids through a physical process, they tend to have a low water absorption capacity and, consequently, they have a limited ability to retain the water absorbed especially when pressure is applied.

To improve the absorption capacity, therefore, various synthetic absorbent materials which can attract water through both physical and chemical mechanisms have been developed; and, representative examples thereof include a partially crosslinked polyacrylic salt, saponified starch-acrylonitrile graft copolymer, crosslinked cellulose-acrylic acid salt graft copolymer, etc. They are useful as sanitary materials such as diapers and sanitary napkins, and in the civil engineering and gardening field. They are also useful in other fields such as coagulation of sludges, dehydration of oils and prevention of dew condensation in construction materials.

Hithereto, many such improved water absorbent resins useful as sanitary materials have been developed. However, in the sanitary materials field, particulary disposable diapers and menstrual napkins, it is very important for the water absorbent resin employed to have a good suction power and gel strength.

US-A-4,497,930 discloses a method for preparing an absorbent polymer, which comprises: polymerizing reaction monomers; dehydrating the resultant hydrophilic polymer to provide a water content ranging from 10 to 40% by weight based on the total amount of the hydrophilic polymer; and crosslinking said hydrophilic polymer in the presence of a crosslinking agent having at least two functional groups in the molecule, which are capable of reacting with carboxyl or carboxylate groups. However, in this method, since the crosslinking agent is added together with water in an amount that can barely dissolve the crosslinking agent therein, its presence tends to be limited to the surface of the polymer. Therefore, although the water absorption capacity and absorption rate of the polymer may be good, the suction power and gel strength tend to be low.

US-A-4,541,871 discloses also a method for preparing an absorbent resin, which comprises: crosslinking a resin having a carboxylate group with 0.005-5% by weight of a crosslinking agent, in the presence of water in a proportion ranging from 0.01 to 1.3 parts by weight per part by weight of the resin. In this method, since water is removed in an amount of less than 0.5 parts by weight on the basis of the added amount of water during the dehydration process, the resultant resin has a poor suction power and gel strength.

The absorbent resins prepared by the methods described in the above-mentioned patents may have good water absorption capacity and absorption rate, but have too poor a suction power and gel strength to be useful for sanitary materials.

Further, US-A-5,032,628 discloses a method for the production of a highly water absorptive resin comprising the steps of neutralizing acrylic acid with an alkali metal hydroxide to form an alkali metal acrylate; mixing the alkali metal acrylate, methacrylic acid (as a polymerization initiator) and a first crosslinking agent; suspending and dispersing the mixture in an aqueous medium for an initial mixture; polymerizing the initial mixture to produce a polymerized intermediate and separating the moisture from the polymerized intermediate by azeotropic distillation to reduce the water content to 15-35% by weight; adding a second crosslinking agent having two epoxy radicals; and mixing "Syloid" of silicate. In this method, however, the crosslinking agent is used without water in the crosslinking process, which limits its presence to the surface of the polymer. Therefore, the polymer produced by this method may fail to possess a satisfactory suction power.

Accordingly, it is an object of the present invention to provide a process for preparing a highly water absorbent resin having a superior suction power and gel strength.

In accordance with one aspect of the invention, there is provided a process for preparing a highly water absorbent resin, which comprises:
(1) dehydrating a polymer obtained by partial neutralization and polymerization of monomers containing a carboxyl group until its water content reaches 25% by weight or less based on the weight of the polymer through an azeotropic distillation in the presence of a lipophilic solvent;
(2) crosslinking the dehydrated polymer in the presence of a hydrophilic crosslinking agent and water added in an amount ranging from 7.0 to 25.0% by weight based on the weight of the dehydrated polymer and dehydrating the crosslinked polymer through an azeotropic distillation until 60% by weight or more of the added amount of water is removed; and
(3) recovering the crosslinked and dehydrated polymer.

During the above process, the water can penetrate into the polymer accompanied with the crosslinking agent, and, as a result, the crosslinking agent can be present on the surface of the polymer in a greater amount while inside of the polymer in a smaller amount. Thereafter, when the crosslinked polymer is dehydrated at the boiling point of the solvent, the degree of crosslinkage on the surface of the polymer becomes high and the degree of the crosslinkage inside of the polymer becomes low, and, as a result, a highly water absorbent resin having an excellent suction power and gel strength can be obtained.

In accordance with another aspect of the invention, there is provided a process for preparing an absorbent resin, which further comprises, between step(2) and step(3), a secondary crosslinking of the polymer crosslinked in step(2) in the presence of a mixture of a hydrophilic crosslinking agent and a hydrophilic solvent after having removed the lipophilic solvent present and a dehydration of the secondarily crosslinked polymer by using an azeotropic distillation method.

During the secondary crosslinking process, the hydrophilic solvent is mainly present on the surface of the polymer together with the crosslinking agent, which results in a higher degree of crosslinkage on the surface of the polymer than inside the polymer when the polymer is dehydrated at the boiling point of the solvent, and, as a result, a highly water absorbent resin having a superior suction power can be obtained.

The reaction monomers containing a carboxyl or carboxylate group employed in polymerization may include: monomers such as acrylic acid and methacrylic acid; graft polymers prepared by grafting acrylic acid with starch, cellulose, agarose or chitin; and copolymers prepared by copolymerizing acrylic acid or methacrylic acid with maleic acrylamide, 2-acrylamido-2-methylpropane sulfonic acid or 2-hydroxyethyl methacrylate.

The neutralization of such monomers may be carried out by using an alkali metal hydroxide, preferably sodium hydroxide,and at a degree of neutralization ranging from 50 to 100%, preferably 60 to 80%, based on the total moles of the monomers or polymers employed. For the neutralization, such monomers or polymers may be dissolved(or suspended) to be a 20 to 70%, preferably 40 to 60% aqueous solution.

Such monomers may be polymerized by a reversed-phase suspension polymerization method in the presence of a lipophilic solvent. Examples of the useful lipophilic solvent may include an aliphatic or aromatic solvent having a boiling point ranging from 30 to 200°C, for example, n-hexane, n-heptane, benzene, xylene, toluene, cyclopentane and cyclohexane, which is preferred. The lipophilic solvent may be employed in an amount ranging from 0.1 to 50 parts by weight, preferably 0.5 to 30 parts by weight, per one part by weight of the monomers employed.

During the polymerization process, a surfactant and a polymerization initiator may be employed. Examples of the surfactant may include sorbitan monolaurate having a hydrophilic-lipophilic balance(HLB) ranging from 8 to 12. The polymerization initiator may be an aqueous radical polymerization initiator; examples thereof may include ammonium persulfate, potassium persulfate, which is preferred, and hydrogen peroxide. The initiator may be introduced alone or in combination with two or more.

The polymer obtained by partial neutralization and polymerization is then dehydrated by using an azeotropic distillation method during or after the polymerization process. The water content of the resultant polymer should be adjusted to 25% by weight or less,based on the weight of the polymer, in accordance with the present invention.

The crosslinking agent employed in the crosslinking procedure should be hydrophilic or water-soluble and preferably have at least two epoxy groups, which can react with carboxyl or carboxylate groups. Representative examples of the crosslinking agent may include ethylene glycol diglycidyl ether, glycerol polyglycidyl ether, trimethylol propane polyglycidyl ether and sorbitol polyglycidyl ether with ethylene glycol diglycidyl ether being preferred. The crosslinking agent may be suitably employed in an amount ranging from 0.005 to 5.0% by weight based on the weight of the polymer, although the amount largely depends on the crosslinking agent and the polymer employed.

In order to obtain a highly water absorbent resin having a superior suction power and gel strength, water should be employed along with the crosslinking agent in the crosslinking reaction in an amount ranging from 7.0 to 25.0% by weight,based on the weight of the polymer, and preferably removed during the dehydration process in an amount of 60% by weight or more based on the added amount of water.

In another embodiment of the present invention as described above, the water absorbent resin may be prepared by a method further comprising a secondary crosslinking of the crosslinked polymer in the presence of a mixture of a hydrophilic crosslinking agent and a hydrophilic solvent after having removed the lipophilic solvent and a dehydration of the secondarily crosslinked polymer by using an azeotropic distillation method.

The secondary crosslinking process can be conducted at the boiling point or higher of the hydrophilic solvent. The hydrophilic crosslinking agent may be used in an amount ranging from 0.5 to 5.0% by weight based on the weight of the polymer; and, the hydrophilic solvent may be used in an amount ranging from 1.7 to 2.7 parts by weight per one part by weight of the polymer. Suitable examples of the hydrophilic solvent may include methanol and ethanol with methanol being preferred.

The crosslinked polymer so prepared may be recovered by filtration followed by drying as known in the art.

The following Examples are intended to illustrate the present invention more specifically.

As for the water absorbent resin prepared in Examples and Comparative Examples, the suction power(in mℓ/g) was evaluated by measuring the sucked amount of water in the resin in 0.9% NaCl aqueous solution for 1,2,3,4 or 5 minutes. The absorption capacity was evaluated as follows: lg of the resin was introduced into 0.9% NaCl aqueous solution; and, 30 minutes thereafter, the gel produced was filtered by using 80 mesh screen and weighed. The gel strength was measured by pressing the resin which had been saturated with deionized water by hand.

### Example 1

In a 500mℓ four-necked round-bottomed flask equipped with a stirrer, a Dean-Stark apparatus, a reflux condenser, a pressure controlled funnel and a nitrogen inlet tube were charged 160g of cyclohexane and 1.0g of Ryoto sugar ester surfactant S-970(HLB=9.0) (a product of Mitsubishi Food Corporation) in oil bath. The reaction flask was purged with nitrogen to remove oxygen, and the bath temperature was increased to 75°C.

In a 200mℓ flask containing 30.9g of acrylic acid was slowly charged 49.1g of an aqueous sodium hydroxide solution(containing 9.2g of NaOH) with cooling to produce a solution having a solid content of 45%, which shows that the acrylic acid was neutralized in a degree of 60% based on the moles thereof. 0.1g of potassium persulfate dissolved in 3g of distilled water was added thereto with stirring. The resulting solution was added dropwise to the above-mentioned 500mℓ flask containing cyclohexane and surfactant through the pressure controlled funnel, and the mixture was reacted to produce a polymer. The bath temperature was increased to 90°C; and 38g of water was removed by an azeotropic distillation so as to provide a water content of 20% by weight in the resultant polymer. Thereafter, 0.2g of ethylene glycol diglycidyl ether dissolved in 5g of water was added to crosslink the polymer. The crosslinking reaction was continued until 5g of water was removed using the Dean-Stark apparatus. Upon the completion of the reaction, the resulting polymerized mixture was vaporized to dryness under a reduced pressure to obtain a dry polymer, whose suction power, absorption capacity and gel strength were evaluated. The evaluation results are shown in Table 3.

### Examples 2 to 5

The procedures described in Example 1 were repeated except for the amount of water employed in dissolving the crosslinking agent for the crosslinking reaction and the amount of water removed during the dehydration process, which varied as shown in Table 1. The evaluation results of the polymer resin thus prepared are shown in Table 3.

**Table 1**

| Example No. | Water Employed(g) | Water Removed(g) |
|---|---|---|
| 2 | 5 | 10 |
| 3 | 6 | 11 |
| 4 | 7 | 12 |
| 5 | 9 | 14 |

### Example 6

The procedures described in Example 1 were repeated except that a solution of 0.5g of ethylene glycol diglycidyl ether dissolved in 6g of distilled water was employed; and, during the dehydration process, 5g of water was removed. The evaluation results of the polymer resin thus prepared are shown in Table 3.

### Example 7

In a 500mℓ four-necked round-bottomed flask equipped with a stirrer, a Dean-Stark apparatus, a reflux condenser, a pressure controlled funnel and a nitrogen inlet tube, were charged 160g of cyclohexane and 1.0g of Ryoto sugar ester surfactant S-970(HLB=9.0) in oil bath. The reaction flask was purged with nitrogen to remove oxygen, and the bath temperature was increased to 75°C.

In a 200mℓ flask containing 30.9g of acrylic acid was slowly charged 49.1g of an aqueous sodium hydroxide solution(containing 9.2g of NaOH) with cooling to produce a solution having a solid content of 45%. A solution of 0.lg of potassium persulfate dissolved in 3g of distilled water was added thereto with stirring. The resulting solution was added dropwise to the above-mentioned 500mℓ flask containing cyclohexane and the surfactant through the pressure controlled funnel, and the mixture was reacted to produce a polymer. The bath temperature was increased to 90°C; and 38g of water was removed by azeotropic distillation so as to provide a water content of 20% by weight in the resultant polymer. Thereafter, a solution of 0.2g of ethylene glycol diglycidyl ether dissolved in 3g of water was added to crosslink the polymer. The crosslinking reaction was continued until 5g of water was removed using the Dean-Stark apparatus. After the completion of the reaction, the cyclohexane solvent was removed therefrom and a mixture of 0.3g of ethylene glycol diglycidyl ether and 100g of methanol was added thereto. The reaction solution was refluxed at 90°C for 2 hours. The resulting polymerized mixture was filtered to remove the methanol solvent and vaporized to dryness under a reduced pressure to obtain a dry polymer, whose suction power, absorption capacity and gel strength were evaluated. The evaluation results are shown in Table 3.

### Examples 8 to 10

The procedures described in Example 7 were repeated except for the amount of water employed in dissolving the crosslinking agent and the amount of methanol employed for the secondary crosslinking process, which varied as shown in Table 2. The evaluation results of the polymer resin thus prepared are shown in Table 3.

**Table 2**

| Example No. | Water Employed(g) | Methanol Employed(g) |
|---|---|---|
| 8 | 5 | 100 |
| 9 | 5 | 80 |
| 10 | 10 | 100 |

### Example 11

The procedures described in Example 8 were repeated except that, in the secondary crosslinking process, a solution of 0.5g of ethylene glycol diglycidyl ether dissolved in 100g of methanol was employed. The evaluation results of the resulting polymer resin are shown in Table 3.

### Example 12

The procedures described in Example 8 were repeated except that, in the first crosslinking process, a solution of 0.5g of ethylene glycol diglycidyl ether dissolved in 5g of water was employed. The evaluation results of the resulting polymer resin are shown in Table 3.

### Comparative Example 1

In a 500mℓ four-necked round-bottomed flask equipped with a stirrer, a Dean-Stark apparatus, a reflux condenser, a pressure controlled funnel and a nitrogen inlet tube were charged 160g of cyclohexane and 1.0g of Ryoto sugar ester surfactant S-970(HLB=9.0) in oil bath. The reaction flask was purged with nitrogen to remove oxygen, and the bath temperature was increased to 75°C.

In a 200mℓ flask containing 30.9g of acrylic acid was slowly charged 49.1g of aqueous sodium hydroxide solution(containing 9.2g of NaOH) with cooling to produce a solution having a solid content of 45%. A solution of 0.lg of potassium persulfate dissolved in 3g of distilled water was added thereto with stirring. The resulting solution was added dropwise to the above-mentioned 500mℓ flask containing cyclohexane and the surfactant through the pressure controlled funnel, and the mixture was reacted to produce a polymer. The bath temperature was increased to 90°C, and 38g of water was removed by an azeotropic distillation so as to provide a water content of 20% by weight in the resultant polymer. After the completion of the reaction, the resulting polymerized mixture was cooled to room temperature, filtered and dried to obtain a polymer whose suction power, absorption capacity and gel strength were evaluated. The evaluation results are also shown in Table 3.

### Comparative Example 2

The procedures described in Comparative Example 1 were repeated except that, after the azeotropic distillation process, 0.2g of ethylene glycol diglycidyl ether was added and then the reactants were refluxed for 2 hours. The evaluation results are also shown in Table 3.

### Comparative Example 3

The procedures described in Comparative Example 1 were repeated except that, after the azeotropic distillation process, a solution of 0.2g of ethylene glycol diglycidyl ether dissolved in lg of water was added and then the reactants were refluxed for 2 hours. The evaluation results are also shown in Table 3.

### Comparative Example 4

The procedures described in Comparative Example 1 were repeated except that, after the azeotropic distillation process, cyclohexane was removed therefrom and a solution of 0.2g of ethylene glycol diglycidyl ether dissolved in 160g of methanol was added, and then the reactants were refluxed for 2 hours. The evaluation results are also shown in Table 3.

### Comparative Example 5

The procedures described in Comparative Example 1 were repeated except that, after the azeotropic distillation process, cyclohexane was removed therefrom and 160g of methanol was added. Subsequently, a solution of 0.5g of ethylene glycol diglycidyl ether dissolved in 15g of water was added and then the reactants were refluxed for 2 hours. The evaluation results are also shown in Table 3.

### Comparative Example 6

The procedures described in Comparative Example 1 were repeated except that, after the azeotropic distillation process, cyclohexane was removed therefrom and a solution of 0.3g of ethylene glycol diglycidyl ether dissolved in 100g of methanol was added, and then the reactants were refluxed for 2 hours. The evaluation results are also shown in Table 3.

### Comparative Example 7

The procedures described in Example 1 were repeated except that the dehydration process by an azeotropic distillation was conducted to provide a polymer having a water content of 45% by weight. The evaluation results are also shown in Table 3.

### Comparative Example 8

The procedures described in Comparative Example 1 were repeated except that, after the azeotropic distillation process, cyclohexane was removed therefrom and 100g of methanol was added. Subsequently, a solution of 0.3g of ethylene glycol diglycidyl ether dissolved in 15g of water was added and then the reactant was refluxed for 2 hours. The evaluation results are also shown in Table 3.

**Table 3**

| | Absorption Capacity | Suction Power(mℓ/g) | | | | | Gel Strength |
|---|---|---|---|---|---|---|---|
| | | 1 min | 2 min | 3 min | 4 min | 5 min | |
| Example 1 | 50 | 7.1 | 10.0 | 11.2 | 11.9 | 12.3 | ○ |
| Example 2 | 55 | 9.6 | 12.2 | 13.6 | 14.5 | 15.2 | ⓞ |
| Example 3 | 50 | 9.3 | 13.4 | 15.5 | 16.7 | 17.5 | ⓞ |
| Example 4 | 60 | 9.4 | 11.5 | 12.7 | 13.5 | 14.0 | ⓞ |
| Example 5 | 50 | 8.4 | 11.5 | 13.5 | 14.7 | 15.8 | ⓞ |
| Example 6 | 45 | 12.6 | 16.5 | 17.9 | 18.6 | 19.0 | ⓞ |
| Example 7 | 60 | 8.1 | 10.0 | 11.7 | 12.8 | 13.5 | ⓞ |
| Example 8 | 58 | 9.5 | 12.1 | 13.4 | 14.2 | 14.9 | ⓞ |
| Example 9 | 55 | 9.6 | 12.2 | 13.6 | 14.5 | 15.2 | ⓞ |
| Example 10 | 53 | 10.1 | 10.7 | 13.7 | 14.3 | 14.8 | ⓞ |
| Example 11 | 55 | 9.7 | 12.2 | 13.4 | 14.1 | 14.7 | ⓞ |
| Example 12 | 50 | 12.1 | 15.3 | 16.7 | 17.5 | 18.4 | ⓞ |
| Comparative Example 1 | 120 | 0.4 | 0.6 | 0.8 | 1.0 | 1.1 | × |
| Comparative Example 2 | 95 | 2.7 | 3.4 | 3.8 | 4.0 | 4.2 | × |
| Comparative Example 3 | 84 | 3.4 | 4.6 | 5.4 | 5.6 | 5.8 | Δ |
| Comparative Example 4 | 90 | 1.1 | 1.4 | 1.6 | 1.8 | 2.0 | × |
| Comparative Example 5 | 74 | 2.1 | 3.9 | 4.4 | 5.0 | 5.4 | Δ |
| Comparative Example 6 | 90 | 1.1 | 1.4 | 1.6 | 1.8 | 2.0 | × |
| Comparative Example 7 | 35 | 7.1 | 9.9 | 10.9 | 11.3 | 11.6 | ⓞ |
| Comparative Example 8 | 82 | 3.1 | 3.9 | 4.4 | 5.0 | 5.4 | Δ |
| ⓞ : difficult to break down even when high pressure is applied to it. | | | | | | | |
| ○ :possible to break down when high pressure is applied to it. | | | | | | | |
| Δ : easy to break down. | | | | | | | |
| × : tacky and easy to break down even when low pressure is applied to it. | | | | | | | |

As shown in Table 3 above, the present invention provides a highly water absorbent resin with improved absorbing properties such as superior suction power and gel strength.

While the invention has been described in connection with the above specific embodiments, it should be recognized that various modifications and changes as may be apparent to those skilled in the art to which the invention pertains may be made and also fall within the scope of the invention as defined by the claims that follow.

## Claims

1. A process for preparing a water absorbent resin comprising:
(1) dehydrating a polymer obtained by partial neutralization and polymerization of monomers containing a carboxyl group until its water content reaches 25% by weight or less based on the weight of the polymer through an azeotropic distillation in the presence of a lipophilic solvent;
(2) crosslinking the dehydrated polymer in the presence of a hydrophilic crosslinking agent and water added in an amount ranging from 7.0 to 25.0% by weight based on the weight of the dehydrated polymer and dehydrating the crosslinked polymer through an azeotropic distillation until 60% by weight or more of the added amount of water is removed; and
(3) recovering the crosslinked and dehydrated polymer.

2. The process of claim 1 wherein an alkali metal hydroxide is employed for the partial neutralization.

3. The process of claim 1 or 2 wherein the lipophilic solvent employed is selected from the group consisting of n-hexane, n-heptane, benzene, xylene, toluene, cyclopentane and cyclohexane.

4. The process of any of claims 1 to 3 wherein the crosslinking agent is employed in an amount ranging from 0.05 to 5.0% by weight based on the weight of the polymer.

5. The process of any of claims 1 to 4 which further comprises, between step (2) and step (3), a secondary crosslinking of the crosslinked polymer in the presence of a mixture of a hydrophilic crosslinking agent and a hydrophilic solvent after having removed the lipophilic solvent and a dehydration of the secondarily crosslinked polymer by using an azeotropic distillation method.

6. The process of any of claims 1 to 5 wherein the crosslinking agent is selected from ethylene glycol diglycidyl ether, glycerol polyglycidyl ether, trimethylol propane polyglycidyl ether and sorbitol polyglycidyl ether.

7. The process of claims 5 or 6 wherein the crosslinking agent is employed in an amount ranging from 0.5 to 5.0% by weight based on the weight of the polymer used for the secondary crosslinking.

8. The process of any of claims 5 to 7 wherein the hydrophilic solvent is employed in an amount ranging from 1.7 to 2.7 parts by weight per one part by weight of the polymer.

9. The process of any of claims 5 to 8 wherein the hydrophilic solvent is methanol.

## Patentansprüche

1. Verfahren zur Herstellung eines Wasser absorbierenden Harzes, umfassend:
(1) Dehydratisieren eines Polymers, das durch teilweise Neutralisierung und Polymerisierung von eine Carboxylgruppeneinheit enthaltenden Monomeren erhalten wurde, durch azeotrope Destillation in Gegenwart eines lipophilen Lösungsmittels, bis sein Wassergehalt, bezogen auf das Gewicht des Polymers, 25 Gew.-% oder weniger erreicht;
(2) Vernetzen des dehydratisierten Polymers in Gegenwart von einem hydrophilen Vernetzungsmittel und Wasser, das in einer Menge, bezogen auf das Gewicht des dehydratisierten Polymers, in einem Bereich von 7,0 bis 25,0 Gew.-% zugegeben wird, und Dehydratisieren des vernetzten Polymers durch azeotrope Destillation bis 60 Gew.-% oder mehr der zugegebenen Wassermenge entfernt worden ist; und
(3) Wiedergewinnen des vernetzten und dehydratisierten Polymers.

2. Verfahren nach Anspruch 1, worin ein Alkalimetallhydroxid für die teilweise Neutralisation verwendet wird.

3. Verfahren nach Anspruch 1 oder 2, worin das verwendete lipophile Lösungsmittel aus der Gruppe ausgewählt wird, die aus n-Hexan, n-Heptan, Benzol, Xylol, Toluol, Cyclopentan und Cyclohexan besteht.

4. Verfahren nach einem der Ansprüche 1 bis 3, worin das Vernetzungsmittel, bezogen auf das Gewicht des Polymers, in einer Menge im Bereich von 0,05 bis 5,0 Gew.-% verwendet wird.

5. Verfahren nach einem der Ansprüche 1 bis 4, das zwischen Schritt (2) und (3) nach Entfernung des lipophilen Lösungsmittels weiter eine sekundäre Vernetzung des vernetzten Polymers in Gegenwart eines Gemisches aus einem hydrophilen Vernetzungsmittel und einem hydrophilen Lösungsmittel und eine Dehydratisierung des sekundären vernetzten Polymers durch Einsatz eines azeotropen Destillationsverfahrens umfaßt.

6. Verfahren nach einem der Ansprüche 1 bis 5, worin das Vernetzungsmittel aus Ethylenglykoldiglycidylether, Glycerolpolyglycidylether, Trimethylolpropanpolyglycidylether und Sorbitpolyglycidylether ausgewählt wird.

7. Verfahren nach Anspruch 5 oder 6, worin das Vernetzungsmittel, bezogen auf das Gewicht des Polymers, das für die sekundäre Vernetzung eingesetzt wird, in einer Menge im Bereich von 0,5 bis 5,0 Gew.-% verwendet wird.

8. Verfahren nach einem der Ansprüche 5 bis 7, worin das hydrophile Lösungsmittel in einer Menge im Bereich von 1,7 bis 2,7 Gewichtsteilen pro einem Gewichtsteil des Polymers verwendet wird.

9. Verfahren nach einem der Ansprüche 5 bis 8, worin das hydrophile Lösungsmittel Methanol ist.

## Revendications

1. Procédé pour préparer une résine absorbant l'eau comportant :
(1) la déshydratation d'un polymère obtenu par neutralisation partielle et polymérisation de monomères contenant un groupe carboxyle jusqu'à ce que sa teneur en eau atteigne 25 % en poids ou moins, en se basant sur le poids du polymère, par distillation azéotrope en présence d'un solvant lipophile ;
(2) la réticulation du polymère déshydraté en présence d'un agent de réticulation hydrophile et d'eau ajoutée dans une quantité allant de 7,0 à 25,0 % en poids, en se basant sur le poids du polymère déshydraté, et la déshydratation du polymère réticulé par une distillation azéotrope jusqu'à ce que 60 % en poids ou plus de la quantité ajoutée d'eau soit enlevée ; et
(3) la récupération du polymère réticulé et déshydraté.

2. Procédé selon la revendication 1, où on utilise un hydroxyde de métal alcalin pour la neutralisation partielle.

3. Procédé selon la revendication 1 ou 2, où le solvant lipophile utilisé est choisi dans le groupe constitué par le n-hexane, le n-heptane, le benzène, le xylène, le toluène, le cyclopentane et le cyclohexane.

4. Procédé selon l'une quelconque des revendications 1 à 3, où l'agent de réticulation est utilisé dans une quantité allant de 0,05 à 5,0 % en poids en se basant sur le poids du polaire.

5. Procédé selon l'une quelconque des revendications 1 à 4, qui comporte en outre, entre l'étape (2) et l'étape (3), une réticulation secondaire du polymère réticulé en présence d'un mélange d'un agent de réticulation hydrophile et d'un solvant hydrophile, après avoir enlevé le solvant lipophile, et une déshydratation du polymère avec réticulation secondaire en utilisant un procédé de distillation azéotrope.

6. Procédé selon l'une quelconque des revendications 1 à 5, où l'agent de réticulation est choisi parmi l'éther diglycidyle de l'éthylèneglycol, l'éther polyglycidyle du glycérol, l'éther polyglycidyle du triméthylolpropane et l'éther polyglycidyle du sorbitol.

7. Procédé selon les revendications 5 ou 6, où l'agent de réticulation est utilisé dans une quantité allant de 0,5 *à* 5,0 % en poids en se basant sur le poids du polymère utilisé pour la réticulation secondaire.

8. Procédé selon l'une quelconque des revendications 5 à 7, où le solvant hydrophile est utilisé dans une quantité allant de 1,7 à 2,7 parties en poids pour une partie en poids du polymère.

9. Procédé selon l'une quelconque des revendications 5 à 8, où le solvant hydrophile est le méthanol.
